# EUROPEAN PATENT SPECIFICATION

(11) **EP 4 578 695 B1**
(45) Date of publication and mention of the grant of the patent: **21.10.2026**
(21) Application number: 24193492.6
(22) Date of filing: 08.08.2024
(51) Int. Cl.: B60K 35/22, B60K 35/53, B60K 35/60, B60R 11/00, B60R 11/02

(54) **DISPLAY DEVICE AND VEHICLE EQUIPPED WITH SAME**
ANZEIGEVORRICHTUNG UND DAMIT AUSGESTATTETES FAHRZEUG
DISPOSITIF D'AFFICHAGE ET VÉHICULE ÉQUIPÉ DE CELUI-CI

(30) Priority: 28.12.2023 KR 20230194168
(43) Date of publication of application: 02.07.2025
(73) Proprietor: Hyundai Mobis Co., Ltd., Gangnam-gu Seoul 06141 (KR)
(72) Inventor: AN, Hyun Jun, 15874 Gunpo-si (KR); LEE, Shin Jik, 18437 Hwaseong-si (KR); LEE, Jun, 16902 Yongin-si (KR); KIM, Kyung Hoon, 13600 Seongnam-si (KR)
(74) Representative: Vossius & Partner Patentanwälte Rechtsanwälte mbB

(56) References cited:
- US-A1- 2019 344 664
- US-A1- 2020 371 733
- US-A1- 2023 302 906

## Description

### BACKGROUND

### 1. Field

The present invention relates to a display device for providing a see-through area in a vehicle and vehicle equipped with the same.

### 2. Description of the Related Art

A center fascia display of a vehicle may display various visual information about the vehicle. Such a display device may also be installed on a dashboard of a vehicle disposed in front of a driver's seat and a front passenger seat, and provides various convenience information such as navigation, vehicle management and operation, Internet, and entertainment.

With the digitization of vehicles, various convenience information is being provided through diverse communication functions. For example, the location of a vehicle is checked remotely via the Internet or a smartphone, and nearby charging stations are discovered. In addition, all information on the current state of the vehicle is monitored in real time. For example, battery charging or pre-conditioning is capable of being easily activated with just a touch of a button. Moreover, intelligent driving assistance systems acquire information on road travel, thereby creating a more convenient driving environment for drivers.

Recently, display devices mounted on vehicles are becoming larger, and thus, there is a need for means to effectively display various convenience information.

Furthermore, there is an increasing demand for the manipulation and operation of display devices capable of providing more effective usability to drivers and passengers.

US 2023/302906 (A1) relates to a method and a device for controlling a display based on a driving context.

US 2019/344664 (A1) relates to a multifunction device for a vehicle and a dashboard for a vehicle with such a multifunction device.

US 2020/371733 (A1) relates to on-screen interaction among a plurality of devices.

### SUMMARY

Accordingly, the present invention is directed to a display device and vehicle equipped with the same that substantially obviate one or more problems due to limitations and disadvantages of the related art.

The present invention aims to provide a display device for effectively providing various convenience information by adjusting the height of a display depending on the position of a specific facial portion of a driver and vehicle equipped with the same.

The present invention aims to provide a display device for efficiently controlling the movement and tilting of a display through a drive module including a ball screw member and a link member and vehicle equipped with the same.

The present invention aims to provide a display device for organically controlling the movement of a display through a four-bar linkage structure involving four rotation points formed on a first link, a second link, and a support bracket and vehicle equipped with the same.

It will be appreciated by persons skilled in the art that the objects that could be achieved with the present disclosure are not limited to what has been particularly described hereinabove and the above and other objects that the present disclosure could achieve will be more clearly understood from the following detailed description.

The present invention is specified by the independent claim. Preferred embodiments are defined by the dependent claims.

In the present invention, a display device including a see-through area for a vehicle, includes: a front display having a plurality of display areas and located in front of a driver seat and a passenger seat of the vehicle; a drive module configured to adjust a position of the front display; and a see-through module adjacent to a front lower part of the front display when the front display is located at a lowest point, wherein the see-through module comprises a see-through panel configured to provide information to a driver and a passenger by transmitting light from a lower area of the front display.

The see-through module may further include a rubber member coupled to a first end of the see-through panel, and the rubber member may be in contact with the front lower part of the front display and configured to block light from leaking through a gap between the see-through panel and the front lower part of the front display.

The see-through module may further include: a housing coupled to the see-through panel; and a reflector located inside the housing, positioned opposite the front lower part of the front display, and configured to reflect light transmitted from a lower area of the front display.

The reflector may include a reflective surface made of a thin metal film, the thin metal film including aluminum.

The drive module is linked to a camera mounted on the vehicle, and configured to adjust the position of the front display based on a position of a specific facial portion of an occupant in the driver seat or the passenger seat, and provide driving force to the front display to enable the front display to rotate and move in a curved path.

The display device may further include: a support bracket coupled to a rear surface of the front display, and the drive module may include: a link member rotatably coupled to the support bracket; and a ball screw member connected to the link member and configured to move in a straight line and rotate the link member.

The support bracket may include: a first rotation protrusion formed on a first side thereof; and a second rotation protrusion formed on a second side thereof, and the link member may include: a first link into which the first rotation protrusion is inserted on a first side thereof, the first link comprising a first guide groove formed longitudinally; and a second link into which the second rotation protrusion is inserted on the first side thereof.

The drive module may include a fixed bracket formed to rotatably couple a second side of the first link and a second side of the second link, wherein the fixed bracket may include a guide plate into which the first rotation protrusion is inserted, and wherein a second guide groove configured to guide a curved movement of the support bracket may be formed on the guide plate.

The drive module may further include: a rotation shaft coupled to the second side of the first link; and a rotation plate extending from an outer peripheral surface of the rotation shaft and coupled to the ball screw member.

The position of the front display may include a height of the display.

The position of the specific facial portion of the occupant in the driver seat or the passenger seat may be detected by a camera.

A vehicle includes: a vehicle body; a mounting portion located on the vehicle body; and a display device mounted on the mounting portion and configured to provide a see-through area, wherein the display device includes: a front display having a plurality of display areas and located in front of a driver seat and a passenger seat of the vehicle; a drive module configured to adjust a height of the front display; and a see-through module adjacent to a front lower part of the front display when the front display is located at a lowest point, and wherein the see-through module includes a see-through panel configured to provide information to a driver and a passenger by transmitting light from a lower area of the front display.

A display system for a vehicle, includes: a front display having display areas and located in front of a driver seat and a passenger seat of the vehicle; a camera to detect a position of a specific facial portion of an occupant in the driver seat or the passenger seat; a drive module in communication with the camera configured to adjust a position of the front display; a see-through module including a reflector and a see-through panel, the see-through panel positioned adjacent to a front lower part of the front display when the front display is located at a lowest point, such that light from the lower area of the front display is reflected by the reflector and transmitted through the see-through panel to provide information to the occupant; and a processor configured to control the drive module to adjust the position of the front display based on the detection of the position of the specific facial portion of the occupant by the camera.

The processor is further configured to control the drive module to adjust the position of the front display to provide optimal viewing by the occupant.

The see-through module may be movable between a first position in which the see-through module is adjacent to the front lower part of the front display to reflect light from the lower part of the front display through the see-through panel, and a second position in which the see-through module is positioned away from the front lower part of the front display such that light from the lower part of the front display is not reflected through the see-through panel.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram illustrating a vehicle according to the present invention;
FIG. 2 is a perspective view of a display device according to the present invention;
FIG. 3 is a diagram for explaining a method of recognizing the position of a specific facial portion of a driver in a display device according to the present invention;
FIGS. 4 to 7 are diagrams for explaining a method of adjusting the height of a front display in a display device according to the present invention;
FIG. 8 is a diagram for explaining a method of detecting the height of a front display through a position detection sensor in a display device according to the embodiment of the present disclosure;
FIG. 9 is a diagram for explaining a method of controlling a display device according to an embodiment of the present disclosure;
FIGS. 10 and 11 are diagrams for explaining various embodiments of a display device control method according to the present disclosure;
FIG. 12 is a diagram illustrating a see-through module in a display device according to the present invention;
FIG. 13 is a diagram illustrating a see-through panel in a display device according to the present invention; and
FIG. 14 is a diagram illustrating information provided to a see-through panel in a display device according to the present invention.

### DETAILED DESCRIPTION

Description will now be given in detail according to exemplary embodiments disclosed herein, with reference to the accompanying drawings. The same components may be provided with the same reference numbers, and description thereof will not be repeated. As used herein, the suffixes "module" and "part" are added or used interchangeably to facilitate preparation of this specification and are not intended to suggest distinct meanings or functions. In describing embodiments disclosed in this specification, relevant well-known technologies may not be described in detail in order not to obscure the subject matter of the embodiments disclosed in this specification. In addition, it should be noted that the accompanying drawings are only for easy understanding of the embodiments disclosed in the present specification, and should not be construed as limiting the technical scope disclosed in the present specification. As such, the present disclosure should be construed to extend to any alterations, and substitutes in addition to those which are particularly set out in the accompanying drawings.

Although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, it will be understood that when an element is referred to as being "directly connected with" another element, there are no intervening elements present.

A singular representation may include a plural representation unless it represents a definitely different meaning from the context.

The terms such as "include" or "have" used herein are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

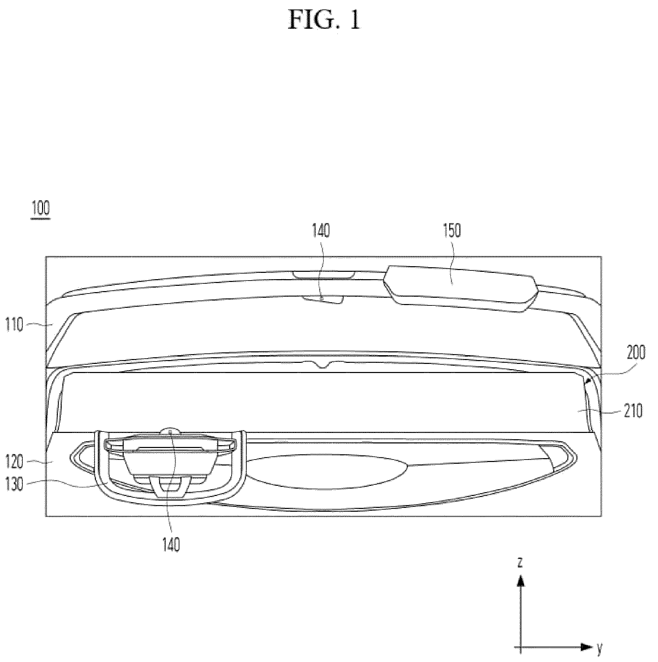

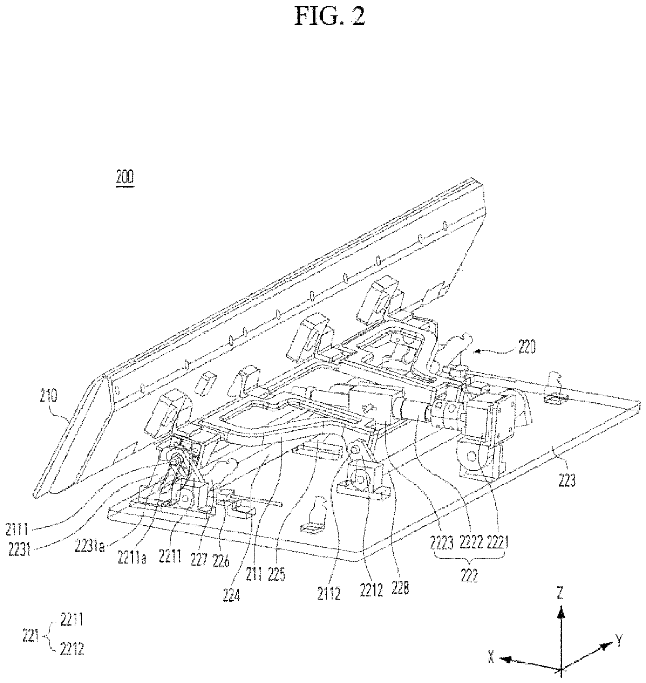

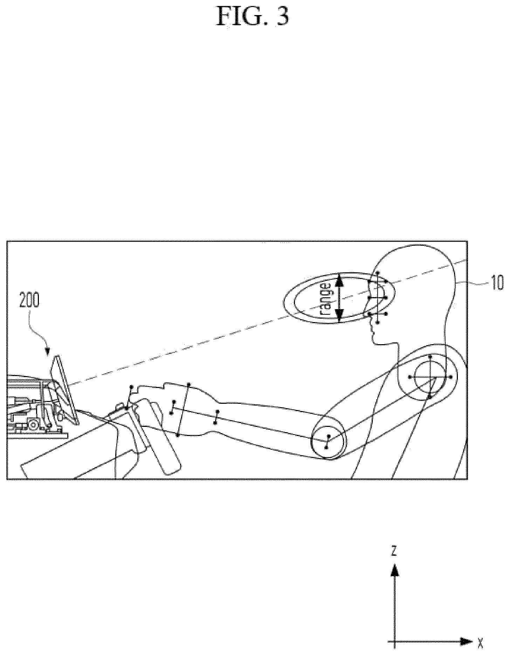

FIG. 1 is a diagram illustrating a vehicle 100 according to the present invention. FIG. 2 is a perspective view of a display device 200 according to the present invention. FIG. 3 is a diagram for explaining a method of recognizing the position of a specific facial portion of a driver 10 in a display device 200 according to the present invention.

Hereinafter, in describing the display device 200 according to the present invention, it is assumed that the front and rear direction is the x-axis direction, the left and right direction is the y-axis direction, and the up and down direction is the z-axis direction.

FIG. 1 is a diagram illustrating the vehicle 100 according to the present invention. Specifically, FIG. 1 shows the front of a driver seat and a front passenger seat inside the vehicle 100.

As shown in FIG. 1, the display device 200 is mounted on a mounting portion 120 located on a vehicle body 110. The mounting portion 120 may include a dashboard positioned in front of the driver seat and front passenger seat. In addition, the display device 200 includes a front display 210 positioned in front of the driver seat and front passenger seat of the vehicle 100. As illustrated in FIG. 2, the display device 200 includes a drive module 220 for adjusting the height of the front display 210.

In addition, a steering wheel 130 may be positioned in front of the driver seat. The steering wheel 130 mounted on the vehicle 100 according to the embodiment of the present disclosure may include a D-shaped steering wheel 130 to secure a better view of the driver towards the front display 210. A camera 140 is positioned on the top of the mounting portion 120 or vehicle body 110.

The camera 140 mounted on the vehicle 100 plays a role in recognizing the position of the specific facial portion of the driver. The drive module 220 is linked to the camera 140 and configured to adjust the height of the front display 210 depending on the position of the specific facial portion of the driver.

Referring to FIG. 3, the display device 200 according to the present invention may recognize the position of the specific facial portion (e.g., eyes or nose) of the driver 10 through the camera 140. In an embodiment, while the driver 10 is sitting on the seat, the position of the specific facial portion of the driver 10 may be recognized within a range shown in FIG. 3 based on a height value, which is a z-axis coordinate value.

Additionally, in the vehicle 100 according to the embodiment of the present disclosure, a passenger airbag 150 may be installed on an upper front portion of the passenger seat in response to enlargement of the display device 200 and adjustment of the height of the front display 210, which will be described later. Accordingly, the present disclosure may promote the safety of passengers as well as provide the display device 200 customized for the passengers.

FIG. 2 is a perspective view of a display device 200 according to the present invention.

The display device 200 according to the present invention includes a drive module 220 that is linked to a front display 210 positioned in front of a driver seat and a passenger seat of a vehicle 100 and a camera 140 mounted on the vehicle 100 and configured to adjust the height of the front display 210 depending on the position of a specific facial portion of a driver. The drive module 220 provides driving force to the front display 210 to allow the front display 210 to rotate and move in a curved path.

A support bracket 211 may be coupled to the rear surface of the front display 210. The drive module 220 may include a link member 221 rotatably coupled to the support bracket 211. The drive module 220 may include a ball screw member 222 that is connected to the link member 221, moves in a straight line, and rotates the link member 221.

The support bracket 211 may include a first rotation protrusion 2111 formed on one side thereof and a second rotation protrusion 2112 formed on the other side thereof. The link member 221 may include a first link 2211 into which the first rotation protrusion 2111 is inserted on one side thereof and a second link 2212 into which the second rotation protrusion 2112 is inserted on the one side thereof. In particular, the first link 2211 may include a first guide groove 2211a formed longitudinally.

The drive module 220 may include a fixed bracket 223 formed to rotatably couple the other side of the first link 2211 and the other side of the second link 2212. The fixed bracket 223 may include a guide plate 2231 into which the first rotation protrusion 2111 is inserted. In particular, the guide plate 2231 may include a second guide groove 2231a formed to guide the curved movement of the support bracket 211.

The drive module 220 may include a rotation plate 225. The rotation plate 225 is formed by extending from a rotation shaft 224 coupled to the other side of the first link 2211 and the outer peripheral surface of the rotation shaft 224. In addition, the rotation plate 225 is coupled to the ball screw member 222. A second rotation shaft 228 may be coupled to the other side of the second link 2212. Therefore, a pair of link members 221 may be rotated simultaneously through the rotation shaft 224.

The ball screw member 222 may include a drive motor 2221, a ball screw bolt 2222, and a ball screw nut 2223. The ball screw bolt 2222 rotates when driven by the drive motor 2221, and the ball screw nut 2223 moves linearly due to the rotation of the ball screw bolt 2222. In this case, the rotation plate 225 may be rotatably coupled to the ball screw nut 2223. Therefore, as the ball screw nut 2223 moves in a straight line, the rotation plate 225 may rotate with the rotation shaft 224, enabling the rotation of the first link 2211.

Additionally, the display device 200 according to the embodiment of the present disclosure may include a position detection sensor 226 that detects the height of the front display 210. The drive module 220 may include a detection plate 227 that extends from the outer peripheral surface of the rotation shaft 224 at a position corresponding to the position detection sensor 226.

Hereinafter, a method of operating the components included in the display device 200 according to the embodiment of the present disclosure will be described in more detail.

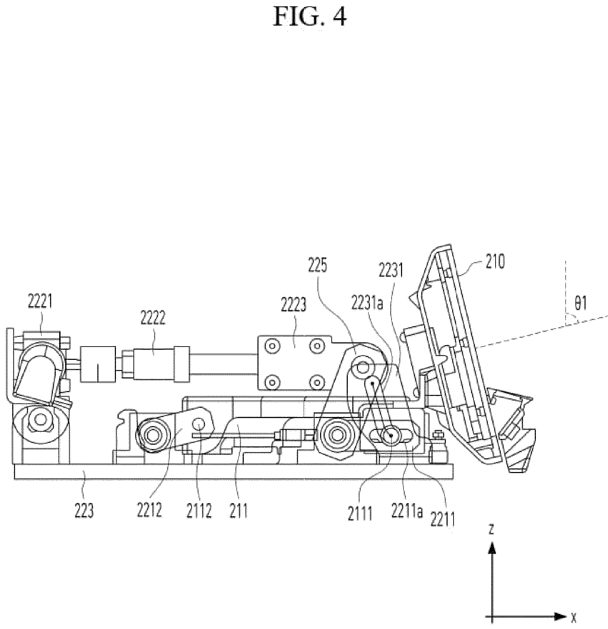

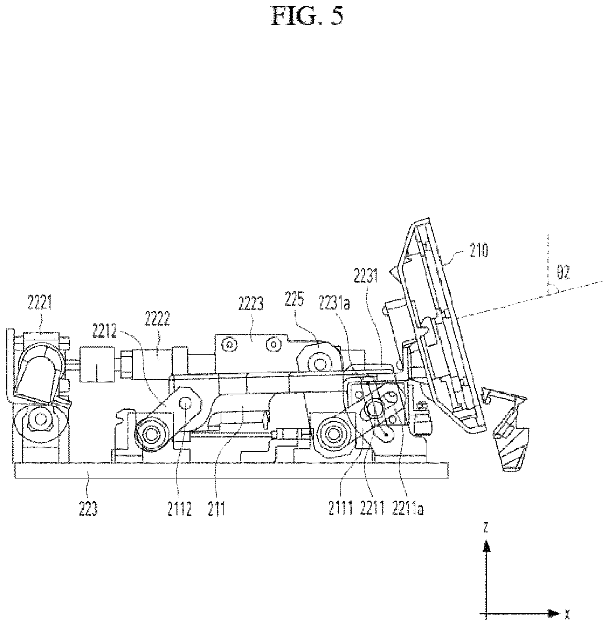

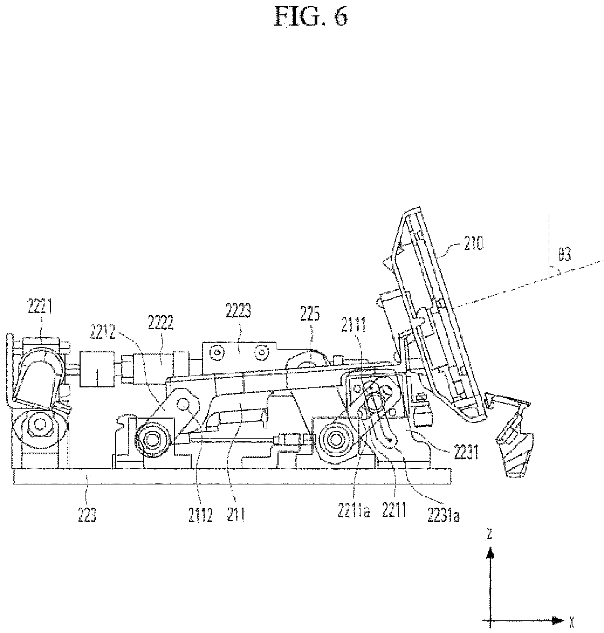

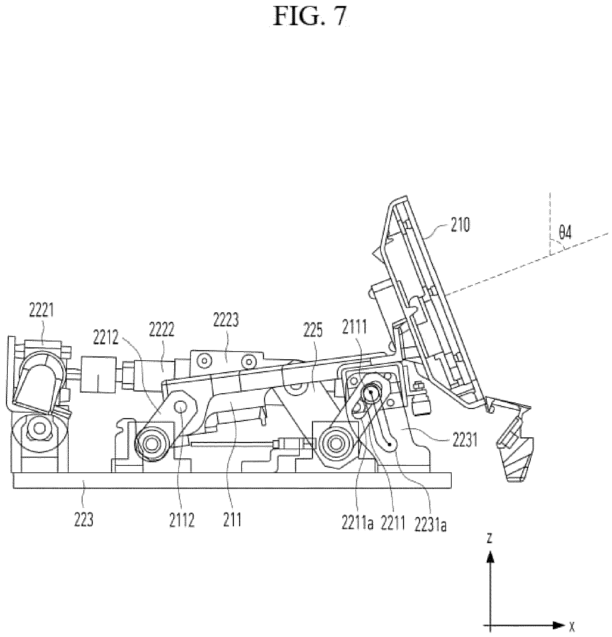

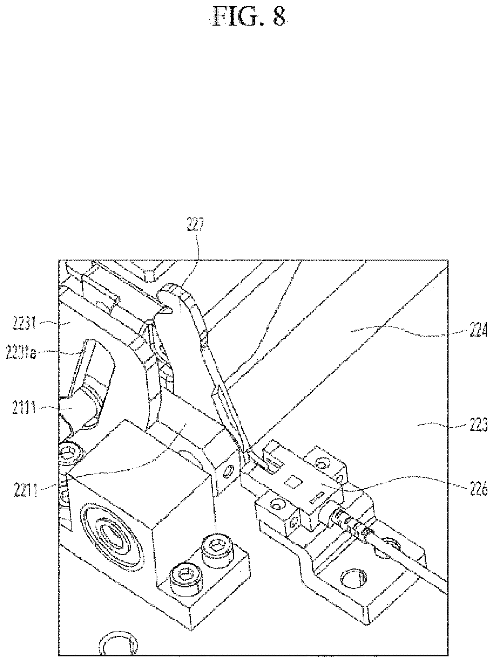

FIGS. 4 to 7 are diagrams for explaining a method of adjusting the height of a front display 210 in a display device 200 according to the present invention. FIG. 8 is a diagram for explaining a method of detecting the height of a front display 210 through a position detection sensor 226 in a display device 200 according to the embodiment of the present disclosure.

Specifically, FIGS. 4 to 7 show that the height of the front display 210 is adjusted by the operation of a drive module 220 and the height of the front display 210 changes from the lowest point to the highest point.

FIG. 4 shows a case where the height of the front display 210 is at the lowest point, and in this case, the front view of a driver or passenger may be maximized. In this state, the height of the front display 210 is adjusted depending on the position of a specific facial portion of the driver through the camera 140 described above in FIG. 3.

Specifically, a ball screw bolt 2222 may rotate by the operation of a drive motor 2221. A ball screw nut 2223 may move in a straight line by the rotation of the ball screw bolt 2222. A rotation plate 225 extending from the outer peripheral surface of a rotation shaft 224 may be rotatably coupled to the side of the ball screw nut 2223. Thus, when the ball screw nut 2223 moves linearly, the rotation plate 225 may rotate together with the rotation shaft 224.

A support bracket 211, which is coupled to the rear surface of the front display 210, may be rotatably coupled to one side of a first link 2211. The rotation shaft 224 may be coupled to the other side of the first link 2211. In addition, the other side of the first link 2211 may be rotatably coupled to a fixed bracket 223.

A first rotation protrusion 2111 formed on one side of the support bracket 211 may be inserted into a first guide groove 2211a formed on the first link 2211. The fixed bracket 223 may include a guide plate 2231 into which the first rotation protrusion 2111 is inserted.

A second rotation protrusion 2112 may be formed on the other side of the support bracket 211. The second rotation protrusion 2112 may be inserted into one side of a second link 2212. The other side of second link 2212 may be rotatably coupled to the fixed bracket 223.

In particular, the first link 2211 may include the first guide groove 2211a formed longitudinally at one side thereof. The first rotation protrusion 2111 may be inserted into the first guide groove 2211a. The guide plate 2231 may include a second guide groove 2231a having a curved shape. The first rotation protrusion 2111 is inserted into the second guide groove 2231a.

Therefore, the rotation of the ball screw bolt 2222 and the linear movement of the ball screw nut 2223 are driven by the drive motor 2221. The rotation of the ball screw bolt 2222 and the linear movement of the ball screw nut 2223 may rotate the first link 2211 and the second link 2212, enabling the support bracket 211 to move and thus adjusting the height of the front display 210.

In particular, as described above, while the front display 210 is moving, the front display 210 also needs to rotate to align with the position of the specific facial portion of the driver. In other words, to align with the position of the specific facial portion of the driver, the angles of θ1, θ2, θ3, and θ4 shown in FIGS. 4 to 7 may all be different. The angles of θ1, θ2, θ3, and θ4 may be associated with the movement of the ball screw nut 2223.

In addition, due to the structure in which the front display 210 is inserted and mounted into the mounting portion 120 of the vehicle 100 described above, it is necessary to protect a front lower part of the front display 210 while the front display 210 is moving.

To this end, the display device 200 according to the present invention enables the front display 210 to rotate and move in a curved path during the movement of the front display 210. This may be implemented through the second guide groove 2231a, which is formed with a curved shape in the guide plate 2231, and the first guide groove 2211a, which is formed longitudinally at one end of the first link 2211.

That is, the first rotation protrusion 2111 formed on the support bracket 211 may be inserted into the first guide groove 2211a and the second guide groove 2231a, allowing the support bracket 211 to rotate and move in a curved path when the first link 2211 rotates.

Therefore, in the display device 200 according to the embodiment of the present disclosure, the drive module 220 may adjust the height of the front display 210 through a four-bar linkage structure involving four rotation points formed on the first link 2211, second link 2212, and support bracket 211.

Additionally, the front display 210 rotates and moves in a curved path to align with the specific facial portion of the driver and to protect the front lower part of the front display 210.

Referring to FIG. 8, in the display device 200 according to the embodiment of the present disclosure, a drive module 220 may include the position detection sensor 226 that detects the height of the front display 210.

In an embodiment, the position detection sensor 226 may be located at the top of a fixed bracket 223. The drive module 220 may include a detection plate 227 extending from the outer peripheral surface of a rotation shaft 224 at a position corresponding to the position detection sensor 226. Therefore, the detection plate 227 may rotate together with the rotation shaft 224, and the position detection sensor 226 may detect the height of the front display 210 by detecting a change in the position depending on the rotation of the detection plate 227.

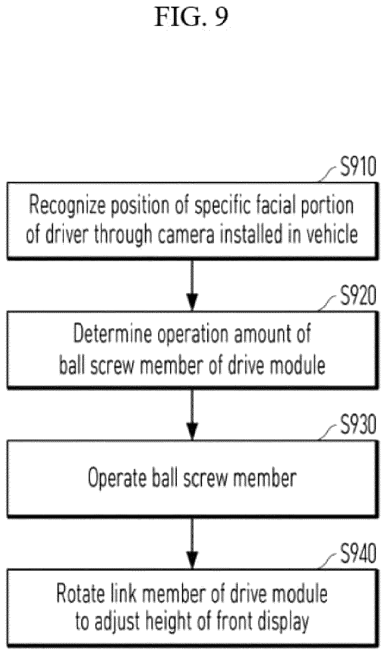

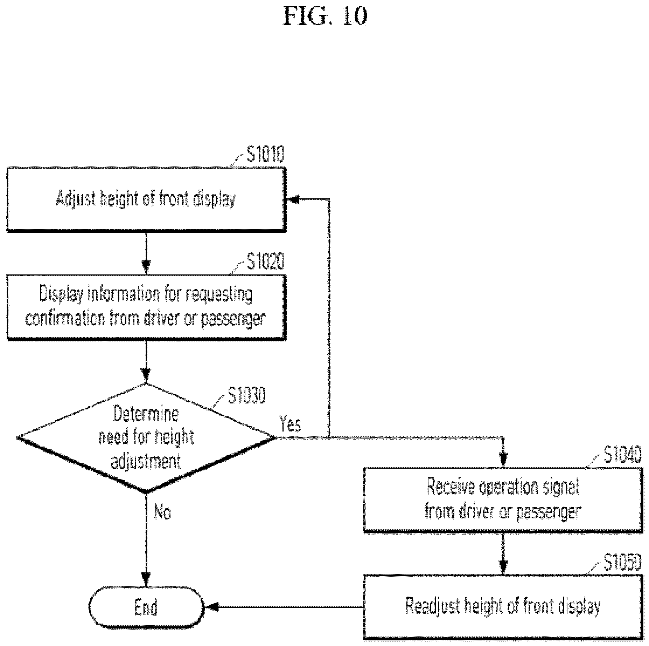

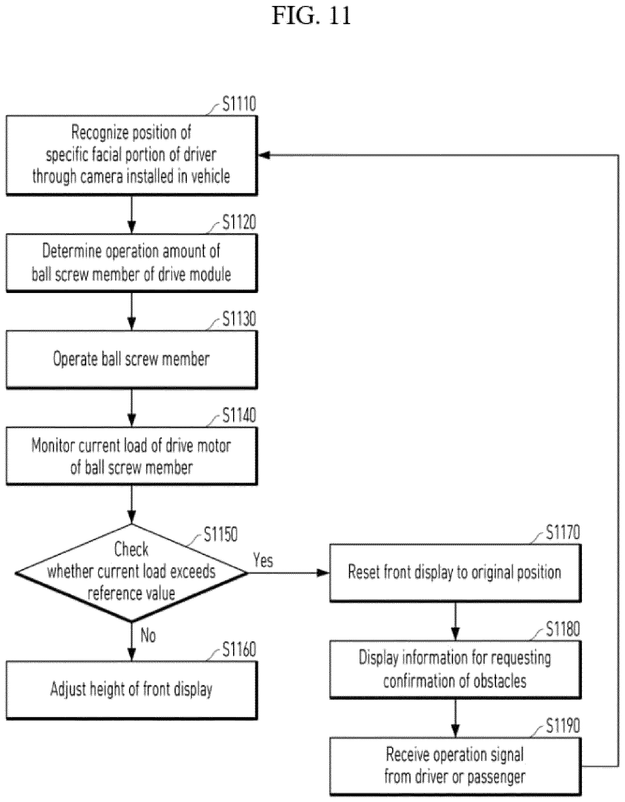

FIG. 9 is a diagram for explaining a method of controlling a display device according to an embodiment of the present disclosure. FIGS. 10 and 11 are diagrams for explaining various embodiments of a display device control method according to the present disclosure.

Hereinafter, the display device control method according to the embodiment of the present disclosure will be described based on the content described above with reference to FIGS. 1 to 8.

In the display device control method according to the present invention, the position of a specific facial portion of a driver is recognized through a camera 140 mounted on a vehicle 100 (S910). Then, the operation amount of a ball screw member 222 of a drive module 220 may be determined based on the recognized position of the specific facial portion (S920). Here, the operation amount of the ball screw member 222 may refer to the movement amount of a ball screw nut 2223 when the ball screw nut 2223 moves in a straight line. Accordingly, the rotation amount of the ball screw bolt 2222 through the operation of a drive motor 2221 may be determined.

Through the operation of the ball screw member 222 (S930), a link member 221 of the drive module 220 may rotate, thereby adjusting the height of a front display 210 (S940). In particular, the display device control method according to the present invention adjusts the height of the front display 210 to align with the position of the specific facial portion of the driver and control the front display 210 to rotate and move in a curved path to protect a front lower part of the front display 210.

FIG. 10 is a diagram for explaining another embodiment of the display device control method according to the present disclosure.

After adjustment of the height of a front display 210 (S1010), information for requesting confirmation from a driver or passenger may be displayed (S1020). The information for requesting confirmation from the driver or passenger may be displayed on the screen of the front display 210, and the displayed information for requesting confirmation may include, for example, whether adjustment of the height of the front display 210 is necessary as shown in FIG. 10 (S1030).

If the driver or passenger determines that the height adjustment is not necessary, the adjusted height of the front display 210 may be maintained. On the other hand, if the driver or passenger determines that the height adjustment is necessary, an operation signal from the driver or passenger may be received (S1040). The operation signal from the driver or passenger may include, for example, adjusting the height of the front display 210 through a touch on the screen of the front display 210. In addition, based on the operation signal from the driver or passenger, the height of the front display 210 may be readjusted (S1050).

Alternatively, the displayed information for requesting confirmation may include information for proceeding to the step of adjusting the height of the front display 210 (S1010). The driver or passenger may initiate the height adjustment step (S1010) again by touching the screen of the front display 210.

FIG. 11 is a diagram for explaining a further embodiment of the display device control method according to the present disclosure.

After recognizing the position of a specific facial portion of a driver through a camera 140 mounted on a vehicle 100 (S1110), the operation amount of a ball screw member 222 of a drive module 220 may be determined depending on the position of the recognized specific facial portion (S1120). The ball screw member 222 may operate based thereon (S1130).

In this case, a current load of the drive motor 2221 of the ball screw member 222 may be monitored (S1140), and it may be determined whether the monitored current load exceeds a reference value (S1150). This is because, if the operation of the drive module 220 is obstructed by obstacles, it may lead to damage of the display device 200. If the monitored current load does not exceed the reference value, the operation of the ball screw member 222 may continue, allowing the height of a front display 210 to be adjusted (S1160).

On the other hand, if the monitored current load exceeds the reference value, that is, if the operation of the drive module 220 is obstructed by obstacles, the front display 210 may be returned to the original position (S1170). Thereafter, information for requesting confirmation of obstacles may be displayed (S1180). The information for requesting confirmation of obstacles may be displayed on the screen of the front display 210. In addition, an operation signal from the driver or passenger may be received (S1190).

The operation signal from the driver or passenger may be received, for example, through a touch on the screen of the front display 210. After removing any obstacles that obstruct the operation of the drive module 220, the driver or passenger may send the operation signal to enable the drive module 220 to operate again through the touch on the screen of the front display 210. Thereafter, the display device control method may return to the step of recognizing the position of the specific facial portion of the driver through the camera 140 mounted on the vehicle 100 (S1110).

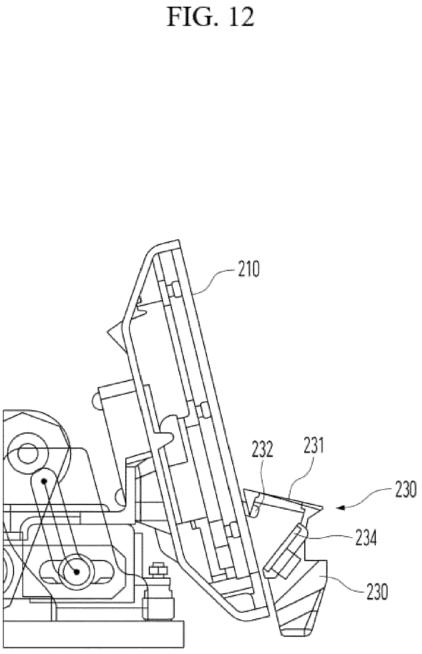

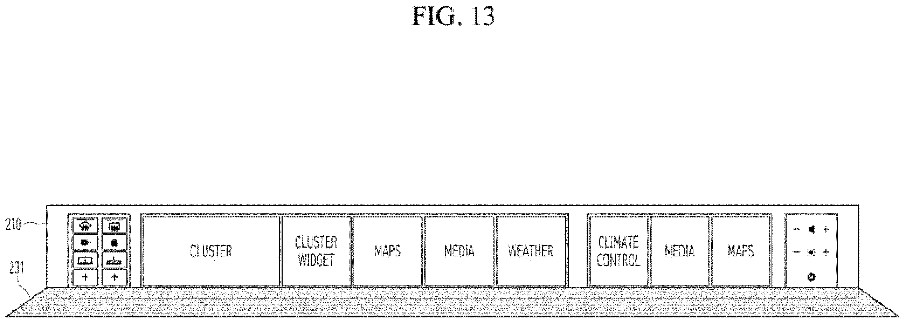

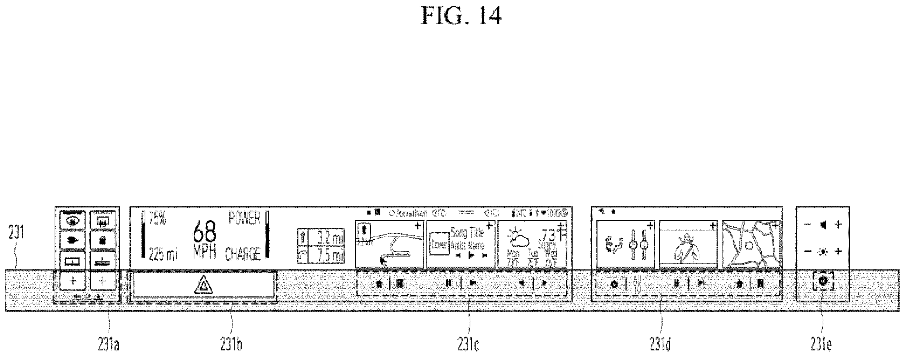

FIG. 12 is a diagram illustrating a see-through module 230 in a display device 200 according to the present invention. FIG. 13 is a diagram illustrating a see-through panel 231 in a display device 200 according to the present invention. FIG. 14 is a diagram illustrating information provided to a see-through panel 231 in a display device 200 according to the present invention.

Referring to FIGS. 4 and 12 together, the display device 200 according to the present invention includes the see-through module 230 that is in close contact with a front lower part of a front display 210 when the front display 210 is positioned at the lowest point.

The see-through module 230 includes a see-through panel 231 configured to provide information to a driver and a passenger by transmitting light from a lower area of the front display 210. In addition, the see-through module 230 may include a rubber member 232 coupled to one end of the see-through panel 231.

The rubber member 232 may be in contact with the front lower part of the front display 210 and serve to block light from leaking through a gap between the see-through panel 231 and the front lower part of the front display 210. In other words, it is possible to form a darkroom to create a see-through area through the rubber member 232, which may make the information provided through the see-through panel 231 appear clearer to the driver and passenger.

As described above, in the display device 200 according to the embodiment of the present disclosure, the front display 210 moves in a curved path and rotates while the height thereof is adjusted, which may minimize interference with the see-through module 230.

In the display device 200 according to the embodiment of the present disclosure, the see-through module 230 may include a housing 233 coupled to the see-through panel 231 and a reflector 234 located inside the housing 233, positioned opposite the front lower part of the front display 210, and configured to reflect light. The reflector 234 may include a reflective surface made of a thin metal film including aluminum. The reflector 234 may be positioned at an appropriate angle inside the housing 233 such that light from the lower area of the front display 210 is reflected and transmitted through the see-through panel 231.

Referring to FIGS. 12 to 14 together, in the display device 200 according to the present invention, the front display 210 includes a plurality of display areas. As described above, the plurality of display areas may provide convenience to passengers by offering driving-related information, maps, media, and weather-related applications.

In the display device 200 according to the embodiment of the present disclosure, when the height of the front display 210 is at the lowest point, the forward view of the driver or passenger may be maximized as described above in FIG. 4. In this case, light from the lower area of the front display 210 is transmitted through the see-through panel 231, thereby providing various information 231a, 231b, 231c, 231d, and 231e to the driver and passenger.

The information provided through the see-through panel 231 may correspond to information displayed in the plurality of display areas at the top of the front display 210. The information provided through the see-through panel 231 may be a simplified version of the information displayed at the top of the front display 210. The simplified information refers to information capable of being implemented at a lower resolution than the information displayed at the top of the front display 210, information capable of being displayed with a small amount of data, or a combination thereof.

In the display device 200 according to the embodiment of the present disclosure, the see-through panel 231 may also serve a role for the interior design of the vehicle 100. Additionally, various colors of light related to information on the driving of the vehicle 100 may be transmitted through the see-through panel 231 to provide the driving information to the driver or passenger.

In summary, the display device and vehicle equipped with the same according to the present invention provides information to the driver and passenger by transmitting light from the lower area of the front display through the see-through area. In addition, the display device and vehicle equipped with the same according to the present invention adjusts the height of the display depending on the position of a specific facial portion of the driver, thereby effectively providing various convenience information. Moreover, the display device and vehicle equipped with the same according to the present disclosure may efficiently control the movement and tilting of the display through the drive module including the ball screw member and the link member. Further, the display device and vehicle equipped with the same according to the present disclosure may organically control the movement of the display through a four-bar linkage structure involving four rotation points formed on the first link, second link, and support bracket.

## Claims

1. A display device (200) including a see-through area for a vehicle (100), the display device (200) comprising:
a front display (210) having a plurality of display areas and located in front of a driver seat and a passenger seat of the vehicle (100);
and
a see-through module (230) adjacent to a front lower part of the front display (210) when the front display (210) is located at a lowest point,
wherein the see-through module (230) comprises a see-through panel (231) configured to provide information to a driver and a passenger by transmitting light from a lower area of the front display (210),
**characterized in that**
the display device further comprising:
a drive module (220) configured to adjust a position of the front display (210);
wherein the drive module (220) is linked to a camera (140) mounted on the vehicle (100), and
wherein the drive module (220) is configured to:
adjust the position of the front display (210) based on a position of a specific facial portion of an occupant in the driver seat or the passenger seat; and
provide driving force to the front display (210) to enable the front display (210) to rotate and move in a curved path.

2. The display device of claim 1,
wherein the see-through module (230) further comprises a rubber member (232) coupled to a first end of the see-through panel (231), and
wherein the rubber member (232) is in contact with the front lower part of the front display (210) and configured to block light from leaking through a gap between the see-through panel (231) and the front lower part of the front display (210).

3. The display device of claim 2, wherein the see-through module (230) further comprises:
a housing (233) coupled to the see-through panel (231); and
a reflector (234) located inside the housing (233), positioned opposite the front lower part of the front display (210), and configured to reflect light transmitted from a lower area of the front display (210).

4. The display device of claim 3, wherein the reflector (234) comprises a reflective surface made of a thin metal film, the thin metal film including aluminum.

5. The display device of any one of claims 1 to 4, further comprising:
a support bracket (211) coupled to a rear surface of the front display (210),
wherein the drive module (220) comprises:
a link member (221) rotatably coupled to the support bracket (211); and
a ball screw member (222) connected to the link member (221) and configured to move in a straight line and rotate the link member (221).

6. The display device of claim 5, wherein the support bracket (211) comprises:
a first rotation protrusion (2111) formed on a first side thereof; and
a second rotation protrusion (2112) formed on a second side thereof, and
wherein the link member (221) comprises:
a first link (2211) into which the first rotation protrusion (2111) is inserted on a first side thereof, the first link (2211) comprising a first guide groove (2211a) formed longitudinally; and
a second link (2212) into which the second rotation protrusion (2112) is inserted on the first side thereof.

7. The display device of claim 6,
wherein the drive module (220) comprises a fixed bracket (223) formed to rotatably couple a second side of the first link (2211) and a second side of the second link (2212),
wherein the fixed bracket (223) comprises a guide plate (2231) into which the first rotation protrusion (2111) is inserted, and
wherein a second guide groove (2231a) configured to guide a curved movement of the support bracket (211) is formed on the guide plate (2231).

8. The display device of claim 7, wherein the drive module (220) further comprises:
a rotation shaft (224) coupled to the second side of the first link (2211); and
a rotation plate (225) extending from an outer peripheral surface of the rotation shaft (224) and coupled to the ball screw member (222).

9. The display device of any one of claims 1 to 8, wherein the position of the front display (210) comprises a height of the front display (210).

10. The display device of any one of claims 1 to 9, wherein the position of the specific facial portion of the occupant in the driver seat or the passenger seat is detected by the camera (140).

11. A vehicle (100) comprising:
a vehicle body (110);
a mounting portion (120) located on the vehicle body (110); and
a display device (200) according to any one of claims 1 to 10, wherein the display device (200) is mounted on the mounting portion (120) and configured to provide a see-through area.

12. A display system for a vehicle (100), the system comprising:
a display device (200) according to any one of claims 1 to 10;
a camera (140) configured to detect a position of a specific facial portion of an occupant in the driver seat or the passenger seat;
a see-through module (230) comprising a reflector (234) and a see-through panel (231), the see-through panel (231) positioned adjacent to a front lower part of the front display (210) when the front display (210) is located at a lowest point, such that light from the lower area of the front display (210) is reflected by the reflector (234) and transmitted through the see-through panel (231) to provide information to the occupant; and
a processor configured to control the drive module (220) to adjust the position of the front display (210) based on the detection of the position of the specific facial portion of the occupant by the camera (140).

13. The system of claim 12, wherein the processor is further configured to control the drive module (220) to adjust the position of the front display (210) to provide optimal viewing by the occupant.

14. The system of claim 12, or 13, wherein the see-through module (230) is movable between:
a first position in which the see-through module (230) is adjacent to the front lower part of the front display (210) to reflect light from the lower part of the front display (210) through the see-through panel (231), and
a second position in which the see-through module (230) is positioned away from the front lower part of the front display (210) such that light from the lower part of the front display (210) is not reflected through the see-through panel (231).

## Patentansprüche

1. Anzeigevorrichtung (200) einschließlich eines Durchsichtbereichs für ein Fahrzeug (100), wobei die Anzeigevorrichtung (200) aufweist:
eine vordere Anzeige (210) mit mehreren Anzeigebereichen, die vor einem Fahrersitz und einem Beifahrersitz des Fahrzeugs (100) angeordnet ist;
und
ein Durchsichtmodul (230), angrenzend an einen vorderen unteren Teil der vorderen Anzeige (210), wenn sich die vordere Anzeige (210) an einem untersten Punkt befindet,
wobei das Durchsichtmodul (230) ein Durchsichtpaneel (231) aufweist, das konfiguriert ist, einem Fahrer und einem Beifahrer durch Übertragen von Licht von einem unteren Bereich der vorderen Anzeige (210) Informationen bereitzustellen,
**dadurch gekennzeichnet, dass**
die Anzeigevorrichtung ferner aufweist:
ein Antriebsmodul (220), das konfiguriert ist, um eine Position der vorderen Anzeige (210) anzupassen;
wobei das Antriebsmodul (220) mit einer an dem Fahrzeug (100) montierten Kamera (140) verbunden ist, und
wobei das Antriebsmodul (220) konfiguriert ist zum:
Anpassen der Position der vorderen Anzeige (210) basierend auf einer Position eines spezifischen Gesichtsabschnitts eines Insassen auf dem Fahrersitz oder dem Beifahrersitz; und
Bereitstellen einer Antriebskraft an die vordere Anzeige (210), um der vorderen Anzeige (210) zu ermöglichen, sich zu drehen und sich auf einer gekrümmten Bahn zu bewegen.

2. Anzeigevorrichtung nach Anspruch 1,
wobei das Durchsichtmodul (230) ferner ein Gummielement (232) aufweist, das an ein erstes Ende des Durchsichtpaneels (231) gekoppelt ist, und
wobei das Gummielement (232) in Kontakt mit dem vorderen unteren Teil der vorderen Anzeige (210) steht und konfiguriert ist, um das Austreten von Licht durch einen Spalt zwischen dem Durchsichtpaneel (231) und dem vorderen unteren Teil der vorderen Anzeige (210) zu blockieren.

3. Anzeigevorrichtung nach Anspruch 2, wobei das Durchsichtmodul (230) ferner aufweist:
ein Gehäuse (233), das an das Durchsichtpaneel (231) gekoppelt ist; und
einen Reflektor (234), der innerhalb des Gehäuses (233) angeordnet ist, gegenüber dem vorderen unteren Teil der vorderen Anzeige (210) positioniert ist und konfiguriert ist, um Licht zu reflektieren, das von einem unteren Bereich der vorderen Anzeige (210) übertragen wird.

4. Anzeigevorrichtung nach Anspruch 3, wobei der Reflektor (234) eine reflektierende Oberfläche aufweist, die aus einer dünnen Metallschicht hergestellt ist, wobei die dünne Metallschicht Aluminium enthält.

5. Anzeigevorrichtung nach einem der Ansprüche 1 bis 4, ferner aufweisend:
eine Stützhalterung (211), die an eine hintere Oberfläche der vorderen Anzeige (210) gekoppelt ist, wobei das Antriebsmodul (220) aufweist:
ein Verbindungselement (221), das drehbar an die Stützhalterung (211) gekoppelt ist; und
ein Kugelgewindeelement (222), das mit dem Verbindungselement (221) verbunden und konfiguriert ist, um sich geradlinig zu bewegen und das Verbindungselement (221) zu drehen.

6. Anzeigevorrichtung nach Anspruch 5, wobei die Stützhalterung (211) aufweist: einen ersten Drehvorsprung (2111), der an einer ersten Seite davon ausgebildet ist; und
einen zweiten Drehvorsprung (2112), der an einer zweiten Seite davon ausgebildet ist, und
wobei das Verbindungselement (221) aufweist:
eine erste Verbindung (2211), in die der erste Drehvorsprung (2111) auf einer ersten Seite davon eingesetzt ist, wobei die erste Verbindung (2211) eine in Längsrichtung ausgebildete erste Führungsnut (2211a) aufweist; und
eine zweite Verbindung (2212), in die der zweite Drehvorsprung (2112) auf der ersten Seite davon eingesetzt ist.

7. Anzeigevorrichtung nach Anspruch 6,
wobei das Antriebsmodul (220) eine feste Halterung (223) aufweist, die ausgebildet ist, um eine zweite Seite der ersten Verbindung (2211) und eine zweite Seite der zweiten Verbindung (2212) drehbar zu koppeln,
wobei die feste Halterung (223) eine Führungsplatte (2231) aufweist, in die der erste Drehvorsprung (2111) eingesetzt ist, und
wobei eine zweite Führungsnut (2231a), die zur Führung einer gekrümmten Bewegung der Stützhalterung (211) konfiguriert ist, an der Führungsplatte (2231) ausgebildet ist.

8. Anzeigevorrichtung nach Anspruch 7, wobei das Antriebsmodul (220) ferner aufweist:
eine Drehwelle (224), die an die zweite Seite der ersten Verbindung (2211) gekoppelt ist; und
eine Drehplatte (225), die sich von einer äußeren Umfangsoberfläche der Drehwelle (224) erstreckt und an das Kugelgewindeelement (222) gekoppelt ist.

9. Anzeigevorrichtung nach einem der Ansprüche 1 bis 8, wobei die Position der vorderen Anzeige (210) eine Höhe der vorderen Anzeige (210) aufweist.

10. Anzeigevorrichtung nach einem der Ansprüche 1 bis 9, wobei die Position des spezifischen Gesichtsabschnitts des Insassen auf dem Fahrersitz oder dem Beifahrersitz durch die Kamera (140) erfasst wird.

11. Fahrzeug (100), aufweisend:
eine Fahrzeugkarosserie (110);
einen an der Fahrzeugkarosserie (110) angeordneten Befestigungsabschnitt (120); und
eine Anzeigevorrichtung (200) nach einem der Ansprüche 1 bis 10, wobei die Anzeigevorrichtung (200) an dem Befestigungsabschnitt (120) montiert und konfiguriert ist, um einen Durchsichtbereich bereitzustellen.

12. Anzeigesystem für ein Fahrzeug (100), wobei das System aufweist:
eine Anzeigevorrichtung (200) nach einem der Ansprüche 1 bis 10;
eine Kamera (140), die konfiguriert ist, um eine Position eines spezifischen Gesichtsabschnitts eines Insassen auf dem Fahrersitz oder dem Beifahrersitz zu erfassen;
ein Durchsichtmodul (230), aufweisend einen Reflektor (234) und ein Durchsichtpaneel (231), wobei das Durchsichtpaneel (231) angrenzend an einen vorderen unteren Teil der vorderen Anzeige (210) positioniert ist, wenn sich die vordere Anzeige (210) an einem untersten Punkt befindet, sodass Licht aus dem unteren Bereich der vorderen Anzeige (210) vom Reflektor (234) reflektiert und durch das Durchsichtpaneel (231) hindurch übertragen wird, um dem Insassen Informationen bereitzustellen; und
einen Prozessor, der konfiguriert ist, um das Antriebsmodul (220) zu steuern, um die Position der vorderen Anzeige (210) basierend auf der Erfassung der Position des spezifischen Gesichtsabschnitts des Insassen durch die Kamera (140) anzupassen.

13. System nach Anspruch 12, wobei der Prozessor ferner konfiguriert ist, um das Antriebsmodul (220) zu steuern, um die Position der vorderen Anzeige (210) anzupassen, um eine optimale Betrachtung durch den Insassen bereitzustellen.

14. System nach Anspruch 12 oder 13, wobei das Durchsichtmodul (230) bewegbar ist zwischen:
einer ersten Position, in der das Durchsichtmodul (230) an den vorderen unteren Teil der vorderen Anzeige (210) angrenzt, um Licht von dem unteren Teil der vorderen Anzeige (210) durch das Durchsichtpaneel (231) hindurch zu reflektieren, und
einer zweiten Position, in der das Durchsichtmodul (230) von dem vorderen unteren Teil der vorderen Anzeige (210) entfernt positioniert ist, derart, dass Licht von dem unteren Teil der vorderen Anzeige (210) nicht durch das Durchsichtpaneel (231) hindurch reflektiert wird.

## Revendications

1. Dispositif d'affichage (200) comportant une zone transparente pour un véhicule (100), le dispositif d'affichage (200) comprenant :
une unité d'affichage avant (210) ayant une pluralité de zones d'affichage et située devant un siège conducteur et un siège passager du véhicule (100) ;
et
un module transparent (230) adjacent à une partie inférieure avant de l'unité d'affichage avant (210) lorsque l'unité d'affichage avant (210) est située au niveau d'un point le plus bas,
dans lequel le module transparent (230) comprend un panneau transparent (231) configuré pour fournir des informations à un conducteur et à un passager en transmettant de la lumière à partir d'une zone inférieure de l'unité d'affichage avant (210),
**caractérisé en ce que**
le dispositif d'affichage comprenant en outre :
un module d'entraînement (220) conçu pour ajuster une position de l'unité d'affichage avant (210) ;
dans lequel le module d'entraînement (220) est relié à une caméra (140) montée sur le véhicule (100), et
dans lequel le module d'entraînement (220) est conçu pour :
ajuster la position de l'unité d'affichage avant (210) sur la base d'une position d'une partie faciale spécifique d'un occupant dans le siège conducteur ou le siège passager ; et
fournir une force d'entraînement à l'unité d'affichage avant (210) pour permettre à l'unité d'affichage avant (210) de tourner et de se déplacer selon une trajectoire courbe.

2. Dispositif d'affichage selon la revendication 1,
dans lequel le module transparent (230) comprend en outre un élément en caoutchouc (232) accouplé à une première extrémité du panneau transparent (231), et
dans lequel l'élément en caoutchouc (232) est en contact avec la partie inférieure avant de l'unité d'affichage avant (210) et conçu pour empêcher une fuite de lumière à travers un espace entre le panneau transparent (231) et la partie inférieure avant de l'unité d'affichage avant (210).

3. Dispositif d'affichage selon la revendication 2, dans lequel le module transparent (230) comprend en outre :
un boîtier (233) accouplé au panneau transparent (231) ; et
un réflecteur (234) situé à l'intérieur du boîtier (233), positionné en face de la partie inférieure avant de l'unité d'affichage avant (210), et configuré pour réfléchir de la lumière transmise depuis une zone inférieure de l'unité d'affichage avant (210).

4. Dispositif d'affichage selon la revendication 3, dans lequel le réflecteur (234) comprend une surface réfléchissante constituée d'un film métallique mince, le film métallique mince comportant de l'aluminium.

5. Dispositif d'affichage selon l'une quelconque des revendications 1 à 4, comprenant en outre :
un support (211) accouplé à une surface arrière de l'unité d'affichage avant (210), dans lequel le module d'entraînement (220) comprend :
un élément de liaison (221) accouplé en rotation au support (211) ; et
un élément de vis à billes (222) relié à l'élément de liaison (221) et conçu pour se déplacer en ligne droite et faire tourner l'élément de liaison (221).

6. Dispositif d'affichage selon la revendication 5, dans lequel le support (211) comprend : une première saillie de rotation (2111) formée sur un premier côté de celui-ci ; et
une seconde saillie de rotation (2112) formée sur un second côté de celui-ci, et
dans lequel l'élément de liaison (221) comprend :
une première liaison (2211) dans laquelle la première saillie de rotation (2111) est insérée sur un premier côté de celle-ci, la première liaison (2211) comprenant une première rainure de guidage (2211a) formée de manière longitudinale ; et
une seconde liaison (2212) dans laquelle la seconde saillie de rotation (2112) est insérée sur le premier côté de celle-ci.

7. Dispositif d'affichage selon la revendication 6,
dans lequel le module d'entraînement (220) comprend un support fixe (223) formé pour accoupler en rotation un second côté de la première liaison (2211) et un second côté de la seconde liaison (2212),
dans lequel le support fixe (223) comprend une plaque de guidage (2231) dans laquelle la première saillie de rotation (2111) est insérée, et
dans lequel une seconde rainure de guidage (2231a) conçue pour guider un mouvement courbe du support (211) est formée sur la plaque de guidage (2231).

8. Dispositif d'affichage selon la revendication 7, dans lequel le module d'entraînement (220) comprend en outre :
un arbre de rotation (224) accouplé au second côté de la première liaison (2211) ; et
une plaque de rotation (225) s'étendant depuis une surface périphérique externe de l'arbre de rotation (224) et accouplée à l'élément de vis à billes (222).

9. Dispositif d'affichage selon l'une quelconque des revendications 1 à 8, dans lequel la position de l'unité d'affichage avant (210) comprend une hauteur de l'unité d'affichage avant (210).

10. Dispositif d'affichage selon l'une quelconque des revendications 1 à 9, dans lequel la position de la partie faciale spécifique de l'occupant dans le siège conducteur ou le siège passager est détectée par la caméra (140).

11. Véhicule (100) comprenant :
une carrosserie de véhicule (110) ;
une partie de montage (120) située sur la carrosserie de véhicule (110) ; et
un dispositif d'affichage (200) selon l'une quelconque des revendications 1 à 10, dans lequel le dispositif d'affichage (200) est monté sur la partie de montage (120) et conçu pour fournir une zone transparente.

12. Système d'affichage pour un véhicule (100), le système comprenant :
un dispositif d'affichage (200) selon l'une quelconque des revendications 1 à 10 ;
une caméra (140) configurée pour détecter une position d'une partie faciale spécifique d'un occupant dans le siège conducteur ou le siège passager ;
un module transparent (230) comprenant un réflecteur (234) et un panneau transparent (231), le panneau transparent (231) étant positionné de manière adjacente à une partie inférieure avant de l'unité d'affichage avant (210) lorsque l'unité d'affichage avant (210) est située au niveau d'un point le plus bas, de telle sorte que de la lumière provenant de la zone inférieure de l'unité d'affichage avant (210) est réfléchie par le réflecteur (234) et transmise à travers le panneau transparent (231) pour fournir des informations à l'occupant ; et
un processeur configuré pour commander le module d'entraînement (220) afin d'ajuster la position de l'unité d'affichage avant (210) sur la base de la détection de la position de la partie faciale spécifique de l'occupant par la caméra (140).

13. Système selon la revendication 12, dans lequel le processeur est en outre configuré pour commander le module d'entraînement (220) afin d'ajuster la position de l'unité d'affichage avant (210) pour fournir une visualisation optimale par l'occupant.

14. Système selon la revendication 12 ou 13, dans lequel le module transparent (230) est mobile entre :
une première position dans laquelle le module transparent (230) est adjacent à la partie inférieure avant de l'unité d'affichage avant (210) pour réfléchir de la lumière provenant de la partie inférieure de l'unité d'affichage avant (210) à travers le panneau transparent (231), et
une seconde position dans laquelle le module transparent (230) est positionné à l'écart de la partie inférieure avant de l'unité d'affichage avant (210) de telle sorte que de la lumière provenant de la partie inférieure de l'unité d'affichage avant (210) n'est pas réfléchie à travers le panneau transparent (231).
